## Europäisches Patentamt
## European Patent Office
## Office européen des brevets

(11) Numéro de publication: **0 271 401**
B1

(12) **FASCICULE DE BREVET EUROPEEN**

(45) Date de publication du fascicule du brevet:
23.05.90

(51) Int. Cl.⁵: **B01J 4/00**, B01L 3/00

(21) Numéro de dépôt: 87402664.4

(22) Date de dépôt: 25.11.87

(54) Dispositif pour la vidange de réacteurs de laboratoire.

(30) Priorité: 27.11.86 FR 8616545

(43) Date de publication de la demande:
15.06.88 Bulletin 88/24

(45) Mention de la délivrance du brevet:
23.05.90 Bulletin 90/21

(84) Etats contractants désignés:
AT BE CH DE ES FR GB GR IT LI LU NL SE

(56) Documents cités:
BE-A- 567 379
DE-A- 2 506 282
US-A- 3 237 813

(73) Titulaire: RHONE-POULENC SANTE, 20, avenue
Raymond Aron, F-92160 Antony(FR)

(72) Inventeur: Reichert, Jean, 4, allée Maurice Frémineur,
F-93160 Noisy le Grand(FR)
Inventeur: Rasle, Guy, 75bis, rue de Concy,
F-91230 Montgeron(FR)

(74) Mandataire: Hirsch, Marc-Roger, Cabinet Hirsch 34 rue
de Bassano, F-75008 Paris(FR)

ACTORUM AG

## Description

La présente invention concerne un dispositif pour la vidange d'un réacteur utilisable en chimie et, plus particulièrement, d'un réacteur de laboratoire, ce réacteur comportant en regard d'une ouverture munie d'un siège annulaire une première tubulure extérieure cylindrique disposée dans l'axe de cette ouverture, dans laquelle débouche obliquement, au voisinage de ce siège, une seconde tubulure de vidange. Ce dispositif est susceptible d'être piloté automatiquement.

Jusqu'à présent, les dispositifs de vidange de réacteurs utilisables dans les laboratoires étaient essentiellement des vannes manuelles qui du fait de leur conception étaient inaptes à une automatisation. Sur les réacteurs industriels, de tels dispositifs existent mais sont conçus pour être montés sur des réacteurs en acier de grande capacité et destinés à un usage bien déterminé. Ils ne sont pas adaptables directement à de la verrerie de laboratoire. Le simple transfert du domaine industriel au domaine du laboratoire des systèmes existants pose des problèmes d'adaptation que les simples connaissances de l'homme de métier ne permettent pas de résoudre de façon évidente en raison, notamment, de la fragilité du verre, du poids des dispositifs et de l'utilisation polyvalente recherchée dans les laboratoires. Les appareils en verre sont, en effet, essentiellement destinés à la recherche, ce qui implique des conditions d'emploi variables d'une manipulation à l'autre. Les vannes doivent ainsi pouvoir permettre d'écouler aussi bien des solutions homogènes de solvants organiques de faible densité et de grande mobilité que des bouillies épaisses et hétérogènes maintenues en suspension par un moyen d'agitation pendant toute la durée de la coulée. Il n'existait pas, jusqu'à présent, de tels systèmes polyvalents. Les rares essais qui ont été faits dans le domaine du laboratoire présentent des inconvénients majeurs, notamment au niveau de l'accouplement vanne-réacteur et de la souplesse d'emploi.

L'objet de la présente invention est de proposer un dispositif adaptable sur de la verrerie de laboratoire normalisée, permettant de régler finement le diamètre de l'ouverture de la vanne pour permettre l'écoulement dans les conditions désirées de température, de pression et de durée, mais aussi d'obtenir une grande étanchéité dans des gammes de températures allant de -40 à +180°C et de pressions allant de 0,5 à 303 kPa et, en outre, susceptible d'être automatisé.

L'invention concerne un dispositif pour la vidange d'un réacteur utilisable en chimie et, plus particulièrement, d'un réacteur de laboratoire, ce réacteur comportant en regard d'une ouverture munie d'un siège annulaire, une première tubulure extérieure cylindrique disposée dans l'axe de cette ouverture, dans laquelle débouche obliquement, au voisinage de ce siège, une seconde tubulure de vidange; ce dispositif est caractérisé en ce qu'il comprend un obturateur en forme de doigt ou de carotte, mobile axialement dans ladite première tubulure, entre une position de fermeture de l'ouverture par contact avec le siège et une position de dégagement mettant cette ouverture en communication avec la seconde tubulure, des moyens d'étanchéité entre ledit obturateur et la paroi intérieure de ladite première tubulure, des moyens de commande du déplacement de l'obturateur comprenant un vérin fixe par rapport au réacteur, avec un élément mobile solidaire de l'obturateur au moyen d'une tige prolongeant axialement ledit obturateur, ledit dispositif comprenant, en outre, des moyens de butées pour régler la position de fermeture de l'obturateur et la course de ce dernier entre cette position de fermeture et la position de dégagement.

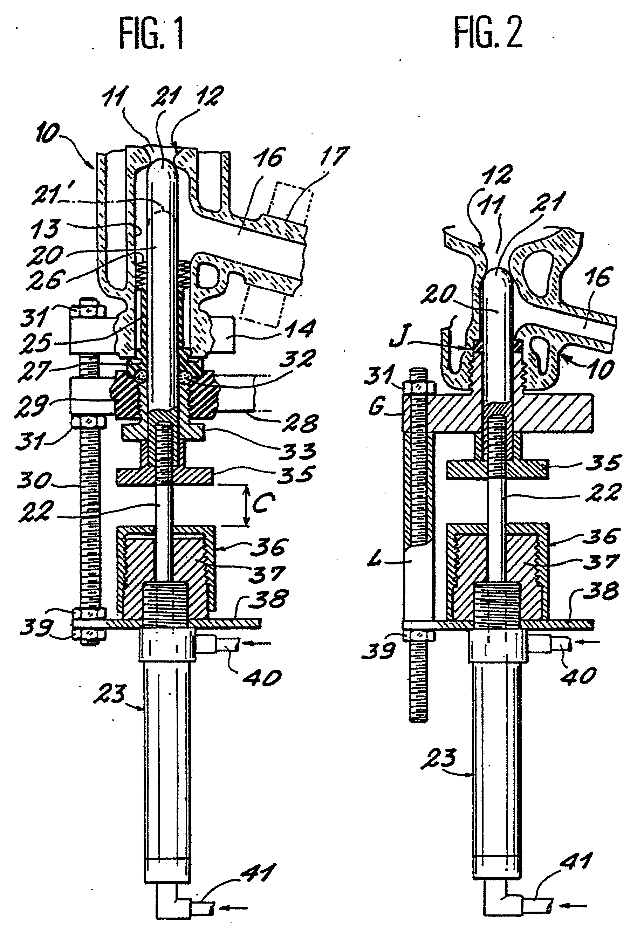

L'invention ressortira d'ailleurs mieux de la description suivante, donnée uniquement à titre d'exemple, en référence au dessin annexé, où la figure 1 est une vue en coupe d'une forme de réalisation du dispositif d'alimentation et de vidange selon l'invention, monté sur un réacteur de laboratoire dont, seule, la partie inférieure avec la tubulure de vidange est représentée.

La figure 2, représentée également en coupe, illustre une variante de réalisation comportant des moyens d'étanchéité et d'adaptation de la vanne sur le réacteur différents de ceux de la forme de réalisation de la figure 1.

Dans la forme de réalisation choisie et représentée à la figure 1 le réacteur de laboratoire 10 comporte, à sa partie inférieure, seule représentée ici, une ouverture 11 pour la vidange de ce réacteur (ou le remplissage à partir de ce réacteur d'un autre réacteur qui lui est couplé) dont le pourtour constitue un siège annulaire 12 et qui est entourée par une tubulure cylindrique 13 disposée selon l'axe de ce siège et se terminant par des moyens de raccordement permettant de fixer une bride extérieure 14.

Une seconde tubulure 16, et pourvue de moyens de raccordement 17 avec l'extérieur, débouche en oblique dans la tubulure 13, au voisinage immédiat du siège 12.

Selon l'invention, un obturateur mobile 20, constitué par un doigt ou carotte de forme cylindrique et réalisé en un matériau approprié, par exemple en polytétrafluoréthylène (PFTE), est disposé selon l'axe de la tubulure 13 et présente une extrémité supérieure arrondie 21, par exemple hémisphérique, adaptée à venir obturer l'ouverture 11 quand ladite extrémité 21 est au contact du siège 12.

L'obturateur 20 est prolongé à sa partie inférieure par une tige métallique 22, vissée dans ledit obturateur et solidaire de l'élément mobile d'un vérin 23 sur le rôle duquel on reviendra ci-après.

Pour assurer l'étanchéité de l'obturateur 20 dans la tubulure 13, un guide creux 25 réalisé par exemple en PFTE entoure ledit obturateur. Ce guide 25 comporte, à sa partie supérieure, une série de feuillets concentriques 26 superposés dont les bords extérieurs, effilés, sont en contact à friction avec la paroi intérieure de la tubulure 13, et à sa partie inférieure un épaulement annulaire 27 qui est en contact à la fois avec la paroi intérieure de la tubulure 13 et avec la bride 14 du réacteur. Une seconde bride 28 comportant un noyau central 29 entoure l'obturateur 20, sous la bride 14. Les deux brides 14 et 28 qui présentent des sections triangulaires, sont reliées l'une à l'autre par des colonnettes filetées, une seule de celles-ci, 30, étant représentée à la figure. Par le vissage d'écrous 31, on peut rapprocher, l'une de l'autre, ces brides 14 et 28, et provoquer ainsi l'écrasement de l'épaulement annulaire 27 du joint entre les brides: on complète, ainsi, l'étanchéité extérieure du réacteur.

Pour assurer l'étanchéité intérieure, un joint annulaire 32 est disposé autour de l'obturateur, sous le guide 25 et est serré contre celui-ci et contre l'obturateur par un écrou moleté 33, vissé dans le noyau central 29.

Le dispositif, selon l'invention, comporte également des moyens de réglage de la course de l'obturateur. Ces moyens consistent en une butée mobile 35 pouvant être déplacée le long de la tige 22 grâce à un filetage de celle-ci coopérant avec un alésage fileté de ladite butée 35, et en une butée réglable 36. Cette butée réglable 36 est mobile axialement par rapport à la base fixe 37 solidaire d'un support 38 du corps du vérin 13, support qui est relié aux colonnettes 30 qui se prolongent au-delà de la bride 28 et qui est fixé, à ces colonnettes, au moyen d'écrous 39.

La tige 22, qui prolonge l'obturateur 20 et est solidaire de l'élément mobile du vérin 23, traverse axialement la butée 36, la base 37 et le support 38 avec un jeu radial suffisant pour coulisser librement.

La butée réglable 36, pour son déplacement axial par rapport à la base fixe 37, comporte un filetage intérieur coopérant avec un filetage extérieur de cette base. Grâce aux deux butées 35 et 36, il est possible de régler la position et la course de l'obturateur 20.

Cet obturateur 20 est mobile, sous l'action du vérin 23 entre une position d'obturation de l'ouverture 11 (position 21 en traits pleins de cet obturateur) et une position de dégagement complet de cette ouverture (position 21' en traits interrompus de l'obturateur).

Pour réaliser le déplacement de l'obturateur 20, le vérin 23, à commande pneumatique par exemple, est muni d'un raccord 40 à la partie supérieure et d'un raccord 41 à la partie inférieure pour l'admission d'air comprimé sous une pression, de 1 à 5 bars par exemple. Lorsque l'air comprimé est admis par le raccord inférieur 41, il actionne le vérin 23 qui pousse vers le haut l'ensemble constitué par la tige 22, la butée mobile 35 et l'obturateur 20. Ce dernier vient alors s'appuyer sur le siège 12 du réacteur et en ferme l'ouverture. Lorsque l'air comprimé est admis par le raccord supérieur 40, l'ensemble redescend jusqu'à ce que la butée mobile 35 vienne en contact avec la butée réglable 36, déterminant ainsi un passage d'ouverture pré-établi en fonction de la position de ladite butée réglable 36.

La butée mobile 35, qui se déplace verticalement le long de la tige 22 au moyen d'un filetage, permet, en fonction de la configuration et des dimensions du réacteur, d'ajuster exactement le doigt ou la carotte 20 sur le siège 12 du réacteur et de déterminer ainsi la position haute de la carotte. Ce système est particulièrement appréciable lorsqu'on veut équiper avec le dispositif selon l'invention un montage déjà existant. La butée 36, permet de régler la course de la carotte en position basse, c'est-à-dire en fait l'ouverture de la vanne. Ainsi, lorsque la butée réglable 36 se trouve en position haute, c'est-à-dire contre la butée mobile 35, la course de la vanne est nulle. Lorsque la butée réglable 36 se trouve en position basse (cas de la figure), la course de la vanne est maximum. Dans la pratique, cette course, repérée par C, varie généralement entre 0 et 20 mm, mais il est évident que cette fourchette peut être supérieure dans le cas où le dispositif est destiné à être monté sur un réacteur de plus grosse capacité.

L'admission d'air comprimé sur le vérin peut être commandée manuellement ou être asservie à un programme piloté par un automate ou un calculateur.

Comme cela résulte de ce qui précède, la vanne fonctionne en tout-ou-rien, c'est-à-dire qu'elle est soit ouverte, soit fermée. Cela permet, en particulier, de vider le réacteur d'un seul coup à vitesse plus ou moins rapide selon le degré d'ouverture de la vanne, mais présente aussi un autre avantage. On peut, en effet, par une gestion régulière et rapide des impulsions d'ouverture et de fermeture de la vanne, obtenir une coulée pseudo-continue particulièrement appréciée des chimistes.

Ce système de commande par impulsions, joint au système de réglage fin d'ouverture de la vanne permet une grande souplesse d'emploi et peut être ajusté en fonction de la nature du liquide ou de la suspension à écouler. Le système de réglage peut même être modifié en cours d'opération si les conditions réactionnelles ne sont pas celles escomptées et imposent une modification ou une vidange immédiate.

Le dispositif selon l'invention trouve de nombreuses applications industrielles dans le domaine de la chimie. Il est particulièrement bien adapté à l'écoulement régulier de bouillies réactionnelles, à la décantation automatique de deux phases liquides hétérogènes (la commande de fermeture de vanne étant, dans ce cas, assurée par un capteur de détection de phases) et, d'une façon générale, aux transferts automatiques ou manuels de matières d'un réacteur dans un autre. Il permet, notamment, une grande reproductibilité des opérations de synthèse. Le dispositif selon l'invention présente, en outre, l'avantage de pouvoir être piloté à distance ce qui le rend particulièrement bien adapté aux réactions dangereuses qui doivent être effectuées dans des blocs isolés. En reliant la sortie 17 du réacteur à la partie supérieure d'un second réacteur, le dispositif permet l'alimentation de ce second réacteur.

Le dispositif décrit et représenté n'est qu'une illustration de l'invention. Il est évident que toute modification dans le détail d'exécution entre dans le cadre de la présente invention dès lors que les éléments essentiels décrits précédemment sont mis en oeuvre pour remplir la même fonction et atteindre le même résultat. C'est ainsi, par exemple, que l'obturateur 20 peut prendre différentes formes pour venir s'appuyer sur le siège 12 du réacteur; il peut ainsi présenter une partie terminale hémisphé rique mais aussi être plus effilé pour réduire le volume mort compris entre la partie basse du réacteur et le point de contact de l'obturateur. L'obturateur peut également avoir une partie supérieure renflée pour que le contact avec le siège 12 se fasse par l'intérieur du réacteur. Le dispositif fonctionne alors en vanne "casse-croûte". Il suffit d'inverser le sens de la pression sur le vérin pour ouvrir et fermer la vanne. Dans ce cas, lors du montage, il suffit d'introduire l'obturateur par l'intérieur du réacteur avant de le visser sur la tige 22.

De même, le vérin pneumatique peut être remplacé par tout système de commande remplissant la même fonction, tel qu'un vérin hydraulique ou un système électromagnétique, dès lors que le mouvement de fermeture ne risque pas de provoquer de chocs susceptibles d'endommager la verrerie ou l'obturateur.

Il faut également noter que l'on peut inverser l'ordre dans lequel les moyens sont mis en oeuvre dans l'appareil représenté sur la figure 1. Ainsi les systèmes de réglage de la vanne constitués par la butée 35, d'une part, et par la butée 36 (avec sa base 37), d'autre part, sont placés entre la base du réacteur 10 et le vérin 23. Il est évident pour l'homme de l'art que ces moyens peuvent être situés sous le vérin lorsqu'on emploie par exemple un vérin dont l'élément mobile traverse de part en part le corps du vérin.

Bien que le réglage de la position de l'obturateur 20 soit avantageusement obtenu par les filetages coopérants des pièces 36 et 37 comme il est indiqué sur la figure 1, ce qui assure un réglage très fin, on peut utiliser tout autre système de réglage, par exemple un système de détection électromagnétique qui positionne l'élément mobile du vérin en fonction de positions d'ouverture préétablies.

D'autres modifications peuvent également rendre la réalisation plus aisée, moins onéreuse ou mieux adaptée à un type de verrerie ou à un usage déterminé sans pour autant sortir du cadre de la présente invention.

Ainsi, le dispositif représenté sur la figure 2 représente une variante d'exécution dans laquelle on retrouve les éléments essentiels de l'invention. Il ne diffère du dispositif représenté sur la figure 1 que par les moyens d'étanchéité et d'adaptation de la vanne sur la base du réacteur 10, la bride G servant à la fois à supporter les colonnettes L et à rendre l'ensemble solidaire du réacteur en se vissant intérieurement au réacteur et non extérieurement comme dans le cas du dispositif de la figure 1. Ainsi dans l'appareil de la figure 2 la pièce G et le joint J jouent le rôle que jouaient dans l'appareil de la figure 1 les pièces 14, 25, 26, 27, 28, 29 et 32.

Bien entendu, la présente invention n'est pas limitée aux modes de réalisation décrits et représentés; elle est susceptible de nombreuses variantes accessibles à l'homme de l'art sans que l'on ne s'écarte pour autant de la portée des revendications attenantes.

**Revendications**

1.- Dispositif pour la vidange d'un réacteur utilisable en chimie et, plus particulièrement, d'un réacteur de laboratoire, ce réacteur comportant en regard d'une ouverture munie d'un siège annulaire une première tubulure extérieure cylindrique disposée dans l'axe de cette ouverture, dans laquelle débouche obliquement, au voisinage de ce siège, une seconde tubulure de vidange, dispositif caractérisé en ce qu'il comprend un obturateur (20) en forme de doigt ou de carotte, mobile axialement dans ladite première tubulure (13), entre une position de fermeture de l'ouverture (11) par contact avec le siège (12) et une position de dégagement mettant cette ouverture en communication avec la seconde tubulure (16), des moyens d'étanchéité (25) entre ledit obturateur et la paroi intérieure de ladite première tubulure (13), des moyens de commande du déplacement de l'obturateur comprenant un vérin (23) fixe par rapport au réacteur, avec un élément mobile solidaire de l'obturateur (20) au moyen d'une tige (22) prolongeant axialement ledit obturateur (20), ledit dispositif comprenant, en outre, des moyens de butées (35, 36) pour régler la position de fermeture de l'obturateur et la course de ce dernier entre cette position de fermeture et la position de dégagement.

2.- Dispositif selon la revendication 1, caractérisé en ce que l'obturateur (20) comporte une tête hémisphérique (21) et est réalisé en polytétrafluoréthylène (PTFE).

3.- Dispositif selon la revendication 1, caractérisé en ce que l'obturateur (20) comporte une tête renflée destinée par exemple à entrer en contact avec l'intérieur du réacteur.

4.- Dispositif selon l'une des revendications 1 à 3, caractérisé en ce que les moyens d'étanchéité comprennent un guide creux (25) entourant l'obturateur et dont la partie supérieure (26) est formée de feuillets concentriques superposés dont les bords extérieurs effilés sont en contact avec la paroi intérieure de la première tubulure (13), sa partie inférieure formant un épaulement annulaire (27) au contact de ladite paroi intérieure et serré entre une première bride (14) fixée sur cette tubulure et une seconde bride (28), des moyens de serrage (31) étant prévus pour le rapprochement des deux brides l'une de l'autre.

5.- Dispositif selon la revendication 4, caractérisé en ce que les moyens d'étanchéité comprennent, en outre, un joint annulaire (32) disposé autour de l'obturateur (20), sous le guide (25), et serré contre celui-ci et contre l'obturateur par un écrou (33) vissé dans un noyau central (29) de la bride (28).

6.- Dispositif selon l'une des revendications 1 à 4, caractérisé en ce que les moyens d'étanchéité comprennent une bride (G) se vissant à l'intérieur de la tubulure verticale du réacteur en écrasant un joint (J), ladite bride servant également de support aux moyens de commande (23) et aux moyens de butée (35,36).

7.- Dispositif selon l'une des revendications 1 à 6, caractérisé en ce que les moyens de butée comprennent une butée mobile (35) pour le réglage de la position de fermeture de l'obturateur, consistant en un écrou vissé sur la tige (22) prolongeant l'obturateur, et une butée réglable (36) pour le réglage de la course de l'obturateur et qui est mobile axialement par rapport à une base fixe (37) solidaire du corps (23) du vérin.

8.- Dispositif selon l'une des revendications 1 à 7, caractérisé en ce que des brides (14 et 28, G), ainsi qu'un support (38) portant le vérin (23) et une base fixe (37) solidaire de ce vérin, sont réunis et fixés au moyen de colonnettes (30, L).

## Claims

1. Device for emptying a vessel for use in chemistry and, more particularly, a laboratory reaction vessel, the reaction vessel including, opposite an opening provided with an annular seat, a first external tubular neck portion lying on the axis of this opening, into which, in the region of said seat, a second tubular neck portion opens out obliquely, said device being characterized in that it includes a closing member (20) in the form of a finger or thin cylinder axially displaceable in said first tubular neck portion (13), between a position where said opening (11) is closed through contact with the seat (12) and an opened position establishing communication between said opening and the second tubular neck portion (16), sealing means (25) between said closing member and the inside wall of said first tubular neck portion (13), means for controlling the displacement of the closing member comprising a screw jacking means (23) fixed with respect to the reaction vessel, with a movable element integral with the closing member (20) through a stem (22) extending said closing member (20) in the axial sense, said device further comprising end stop means (35, 36) for setting the closing position of the closing member and the extend of travel of the latter between said closed and said opened positions.

2. Device according to claim 1, characterized in that the closing member (20) includes a hemispherical head (21) and is provided in polytetrafluoroethylene (PTFE) material.

3. Device according to claim 1, characterized in that the closing member (20) includes an enlarged or widened head intended, for example, to enter into contact with the inside of the reaction vessel.

4. Device according to one of claims 1 to 3, characterized in that the sealing means consist of a hollow guide (25) surrounding the closing member and of which the upper part (26) is in the form of concentric stacked laminae the tapered outer edges of which are in contact with the internal wall of the first tubular neck portion (13), the lower part of which forms an annular shoulder (27) in contact with said internal wall and clamped between a first flange (14) fixed onto this tubular neck portion and a second flange (28), tightening means (31) being provided for bringing the two flanges closer to each other.

5. Device according to claim 4, characterized in that the sealing means further include an annular seal (32) arranged around the closing member (20), under the guide (25), and clamped against the latter and against the closing member by a threaded member (33) screwed into a central core (29) of the flange (28).

6. Device according to one of claims 1 to 4, characterized in that the sealing means include a flange (G) which is screwed into the inside of the vertical tubular neck portion of the reaction vessel while compressing a seal (J), said flange also acting as a support for the jacking means (23) and the end stop means (35, 36).

7. Device according to one of claims 1 to 6, characterized in that the end stop means include a movable abutment means (35) for adjusting the closing position of the closing member, consisting of female threaded member screwed onto the stem (22) that is an extension of the closing member, and an adjustable abutment means (36) for adjusting the travel of the closing member and which is axially displaceable with respect to a fixed base (37) integral with the body (23) of the screw jacking means.

8. Device according to one of claims 1 to 7, characterized in that the flanges (14 and 28, G), together with a support (38) carrying the screw jacking means (23) and a fixed base (37) integral with the screw jacking means, are united and fixed by means of distance pieces (30, L).

## Patentansprüche

1. Vorrichtung zur Entleerung eines in der Chemie verwendbaren Reaktors, insbesondere eines Laboratoriumsreaktors, der über einen ersten äusseren zylinderischen Stutzen verfügt, der an der Stelle einer einen ringförmigen Sitz aufweisenden Öffnung in der Achse dieser Öffnung angeordnet ist, welchem Stutzen in der Nähe dieses Sitzes ein zweiter Entleerungsstutzen schräg einmündet, dadurch gekennzeichnet, dass sie umfasst: ein Sperrelement (20) in Form eines Fingers oder einer Karotte, das im ersten Stutzen (13) axial beweglich zwischen einer Stellung, in der die Öffnung (11) durch Berührung mit dem Sitz (12) geschlossen ist und einer gelösten Stellung, in der diese Öffnung mit dem zweiten Stutzen (16) in Verbindung steht, Dichtmittel (25) zwischen dem genannten Sperrelement und der Innenwand des genannten ersten Stutzens (13), eine aus einem bezüglich des Reaktors fest angeordneten Kraftzylinder (23) bestehende Betätigungsvorrichtung für die Bewegung des Sperrelementes mit einem beweglichen Element, das mit dem Sperrelement mittels einer dieses axial verlängernden Stange (23) vereinigt ist, wobei diese Vorrichtung weiters Anschlagmittel (35, 36) zur Einstellung der Schliessposition des Sperrelementes und des Hubes zwischen der geschlossenen und der gelösten Stellung aufweist.

2. Vorrichtung nach Anspruch 1, dadurch gekennzeichnet, dass das Sperrelement (20) einen halbkugelförmigen Kopf (21) aufweist und aus Polytetrafluoräthylen (PTFE) besteht.

3. Vorrichtung nach Anspruch 1, dadurch gekennzeichnet, dass dass Sperrelement (20) einen verdickten Kopf aufweist, der beispielsweise mit dem Inneren des Reaktors in Berührung steht.

4. Vorrichtung nach einem der Ansprüche 1 bis 3, dadurch gekennzeichnet, dass die Dichtmittel aus einer hohlen Führung (25) bestehen, die das Sperrelement umgibt und deren oberer Teil (26) aus übereinander angeordneten konzentrischen Scheiben besteht, deren verjüngte äussere Ränder die Innenwand des ersten Stutzens (13) berühren, und deren unterer Teil eine ringförmige Schulter (27) bildet, die die genannte Innenwand berührt und eingespannt ist zwischen einem auf diesem Stutzen befestigten ersten Flansch (14) und einem zweiten Flansch (28), wobei Spannmittel (31) zur Annäherung der beiden Flansche vorgesehen sind.

5. Vorrichtung nach Anspruch 4, dadurch gekennzeichnet, dass die Dichtmittel ausserdem aus einer ringförmigen Dichtung (32) bestehen, die unterhalb der Führung (25) um das Sperrelement (20) herum angeordnet ist, und mittels einer in den Zentralkern (29) des Flansches (28) geschraubten Mutter (33) gegen die Dichtung und gegen das Sperrelement gepresst wird.

6. Vorrichtung nach einem der Ansprüche 1 bis 4, dadurch gekennzeichnet, dass die Dichtmittel einen Flansch (G) umfassen, der in das Innere des vertikalen Stutzens des Reaktors einschraubbar ist und dabei eine Dichtung (J) zusammenpresst, wobei dieser Flansch auch der Halterung der Betätigungsmittel (23) und der Anschlagmittel (35, 36) dient.

7. Vorrichtung nach einem der Ansprüche 1 bis 6, dadurch gekennzeichnet, dass die Anschlagmittel umfassen: einen beweglichen Anschlag (35) für die Einstellung der Schliessposition des Sperrelementes, bestehend aus einer auf die das Sperrelement verlängernde Stange geschraubten Mutter, und einen verstellbaren Anschlag (36) für die Verstellung des Hubes des Sperrelementes, der axial beweglich ist bezüglich eines festen Unterteiles (37), das mit dem Körper (23) des Kraftzylinders fest verbunden ist.

8. Vorrichtung nach einem der Ansprüche 1 bis 7, dadurch gekennzeichnet, dass die Flansche (14 und 28, G), sowie eine den Zylinder (23) und ein mit dem Zylinder fest verbundenes Unterteil (37) tragende Grundplatte (38), mittels der Distanzsäulen (30, L) miteinander vereinigt und befestigt sind.

FIG. 1

FIG. 2